# EUROPÄISCHE PATENTANMELDUNG

(11) **EP 2 290 310 A1**
(43) Veröffentlichungstag der Anmeldung: **02.03.2011**
(21) Anmeldenummer: 09166920.0
(22) Anmeldetag: 31.07.2009
(51) Int. Cl.: F27B 3/20, F27D 21/00

(54) **Verfahren zur dynamischen Regelung zumindest einer Einheit umfassend mindestens einen Brenner sowie Vorrichtung zur Durchführung des Verfahrens**

(71) Anmelder: SIEMENS AKTIENGESELLSCHAFT, 80333 München (DE)
(72) Erfinder: Müller, Alexander, 77652 Offenburg (DE)

(57) **Zusammenfassung**

Die Erfindung betrifft ein Verfahren zur dynamischen Regelung zumindest einer Einheit umfassend mindestens einen Brenner, der an einem Lichtbogenofen angeordnet ist, wobei der mindestens eine Brenner auf einer einem Ofenraum des Lichtbogenofens abgewandten Seite mit mindestens einem Infrarotstrahlungsdetektor verbunden ist, mit welchem eine Temperaturmessung erfolgt, wobei während eines Betriebs des mindestens Brenners mindestens eine erste Temperatur gemessen wird, welche auf einer in Richtung des mindestens einen Infrarotstrahlungsdetektor in den mindestens einen Brenner zurückgestrahlten Infrarotstrahlung basiert, wobei die mindestens eine erste Temperatur mit einer Flammenlänge d einer am mindestens einen Brenner brennenden Flamme korreliert wird, welche proportional einem Abstand zwischen einem sich im Ofenraum befindenden Chargiermaterial und dem mindestens einen Brenner ist, und wobei die mindestens eine erste Temperatur zur Bildung mindestens eines Regelsignals zur dynamischen Regelung zumindest der Einheit eingesetzt wird. Die Erfindung betrifft weiterhin eine Vorrichtung zur Durchführung des Verfahrens, ihre Verwendung sowie einen Lichtbogenofen mit mindestens einer solchen Vorrichtung.

## Beschreibung

Die Erfindung betrifft ein Verfahren zur dynamischen Regelung zumindest einer Einheit umfassend mindestens einen Brenner, welcher an einem Lichtbogenofen angeordnet ist. Die Erfindung betrifft weiterhin eine Vorrichtung zur Durchführung des Verfahrens.

Es ist hinreichend bekannt, dass ein Lichtbogenöfen neben Elektroden zum Aufschmelzen von Chargiermaterial, welches üblicherweise eine große Menge an Schrott bzw. Altmetall und gegebenenfalls weitere Zuschlagsstoffe umfasst, eine Anzahl an Brennern im Bereich der Ofenwand aufweist, die den Aufschmelzvorgang unterstützen sollen.

Diese Brenner werden mit organischem Brennstoff betrieben, der in gasförmiger und/oder flüssiger und/oder fester Form, wie z.B. in Form von Erdgas, Öl, Kohlestaub und dergleichen sowie Mischungen daraus, vorliegen kann. Dem organischen Brennstoff wird ein Sauerstoff enthaltendes Brenngas, wie reiner Sauerstoff oder Luft, zugemischt und die Mischung gezündet. Die Verbrennung wird durch Regelung der Zugabemengen an Brennstoff und/oder Brenngas geregelt.

In der Vergangenheit wurde die Betriebsdauer eines oder aller Brenner vorab festgelegt, ohne die tatsächliche optimale Betriebsdauer im jeweiligen Aufschmelzzyklus zu kennen. Allerdings nimmt die Effizienz des Wärmeeintrags in das aufzuschmelzende Chargiermaterial mit steigendem Abstand zwischen dem Brenner und dem aufzuschmelzenden Chargiermaterial und sinkender Oberfläche des Chargiermaterials im Ofenraum ab. Der Wärmeübergang zwischen der am Brenner ausgebildeten Flamme und dem Chargiermaterial erfolgt hauptsächlich durch Konvektion und Strahlung und wird insbesondere durch die Flammentemperatur, die Temperatur des einzuschmelzenden Chargiermaterials und die für den Energieübertrag zur Verfügung stehende Oberfläche des Chargiermaterials beeinflusst. Daher werden die Brenner je nach Zusammensetzung des Chargiermaterials bisher häufig nur solange betrieben, bis etwa 40 - 60% des beim letzten Chargiervorgang in den Ofenraum verbrachten Chargiermaterials aufgeschmolzen wurden.

Ein Abschalten eines Brenners, bei dem der Abstand zwischen Brenner und noch in festem Zustand vorliegendem Chargiermaterial noch klein ist, führt zu einem geringen energetischen Wirkungsgrad des Lichtbogenofens sowie zu einer Verlängerung der erforderlichen Einschmelzdauer. Ein zu geringer Abstand zwischen Brenner und Chargiermaterial kann zudem zu einer Überhitzung des Brenners oder einer Ablenkung der Brennerflamme in Richtung der Ofenwand und in Folge zur Beschädigung des Lichtbogenofens führen. Ein zu spätes Abschalten eines Brenners, d.h. zu einem Zeitpunkt, zu dem der Abstand zwischen Brenner und in festem Zustand vorliegendem Chargiermaterial bereits einen optimalen Wert überschritten hat, führt ebenfalls zu einem verringerten energetischen Wirkungsgrad des Lichtbogenofens sowie zu einem unnötigen Verbrauch von Brennstoff bei gleichzeitig erhöhten Betriebskosten.

Je nach Art, Form und Verteilung des Chargiermaterials im Ofenraum eines Lichtbogenofens kann somit von Aufschmelzzyklus zu Aufschmelzzyklus, von Chargiervorgang zu Chargiervorgang und/oder auch von Brenner zu Brenner innerhalb eines Aufschmelzzyklus eine andere Betriebsdauer pro Brenner optimal sein.

Um den energetischen Wirkungsgrad eines Brenners zu verbessern, kann die Steuerung oder Regelung einer Einheit umfassend den mindestens einen Brenner inzwischen bereits dynamisch erfolgen. Unter einer dynamischen Regelung wird eine an die aktuellen Bedingungen und Störgrößen angepasste Regelung der Einheit umfassend mindestens einen Brenner in Echtzeit verstanden.

Ein derartiges Verfahren und eine derartige Vorrichtung sind beispielsweise aus der EP 1 703 241 B1 bekannt. Es sind dabei sich außerhalb des Lichtbogenofens befindende Hilfsmittel für das berührungslose Messen eines Abstands zwischen einer Stirnseite des Brenners und einem, in einem Zielbereich in festem Zustand vorliegenden, Chargiermaterial beschrieben. Die Hilfsmittel umfassen eine Signalquelle, die ein Signal durch das Innere eines Brenners in Richtung des Zielbereichs aussendet, sowie einen Detektor, der das im Zielbereich abgelenkte, durch den Brennerinnere hindurch rückreflektierte Signal sowie die Zeitdauer vom Absenden bis zur Rückkehr des Signals erfasst. Als geeignete Signalquelle wird hier ein gepulster Laser und als Detektor eine Fotozelle beschrieben. Der gemessene Abstand wird in Folge verwendet, den Betrieb eines Brenners in Echtzeit zu steuern oder zu regeln.

Bei der Lösung gemäß der EP 1 703 241 B1 ist in der rauen Umgebung des Lichtbogenofens demnach eine Signalquelle vorgesehen, die einerseits die Kosten für die dynamische Regelung erhöht und andererseits störanfällig ist. Weiterhin wird die Messung zum Teil erheblich durch die Eigenstrahlung des Chargiermaterials im Zielbereich gestört.

Es ist daher Aufgabe der Erfindung, ein dahingehend verbessertes Verfahren zur dynamischen Regelung einer Einheit umfassend mindestens einen Brenner, welcher an einem Lichtbogenofen angeordnet ist, sowie eine Vorrichtung zur Durchführung eines solchen Verfahrens bereitzustellen.

Die Aufgabe wird für das Verfahren zur dynamischen Regelung zumindest einer Einheit umfassend mindestens einen Brenner, welcher an einem Lichtbogenofen angeordnet ist, wobei der mindestens eine Brenner auf einer einem Ofenraum des Lichtbogenofens abgewandten Seite mit mindestens einem Infrarotstrahlungsdetektor verbunden ist, mit welchem eine Temperaturmessung erfolgt, gelöst, indem während eines Betriebs des mindestens einen Brenners mindestens eine erste Temperatur gemessen wird, welche auf einer in Richtung des mindestens einen Infrarotstrahlungsdetektors in den mindestens einen Brenner zurückgestrahlten Infrarotstrahlung basiert, indem die mindestens eine erste Temperatur mit einer Flammenlänge d einer am mindestens einen Brenner brennenden Flamme korreliert wird, welche proportional einem Abstand zwischen einem sich im Ofenraum befindenden Chargiermaterial und dem mindestens einen Brenner ist, und indem die mindestens eine erste Temperatur zur Bildung mindestens eines Regelsignals zur dynamischen Regelung der Einheit bzw. der zumindest einen Einheit eingesetzt wird.

Die Aufgabe wird von einer Vorrichtung zur Durchführung des erfindungsgemäßen Verfahrens gelöst, umfassend
- zumindest eine Einheit, welche mindestens einen Brenner umfasst, welcher an einem Lichtbogenofen angeordnet ist,
- mindestens eine Regeleinrichtung zur dynamischen Regelung der zumindest einen Einheit auf Basis mindestens eines Regelsignals,
- mindestens einen Infrarotstrahlungsdetektor, welcher auf einer einem Ofenraum des Lichtbogenofen abgewandten Seite des mindestens einen Brenners mit diesem verbunden ist derart, dass während eines Betriebs des mindestens einen Brenners mindestens eine erste Temperatur messbar ist, welche auf einer in Richtung des mindestens einen Infrarotstrahlungsdetektors in den mindestens einen Brenner zurückgestrahlten Infrarotstrahlung basiert, und
- mindestens eine Recheneinheit, welche eingerichtet ist, die mindestens eine erste Temperatur mit einer Flammenlänge d einer am mindestens einen Brenner brennenden Flamme zu korrelieren, welche proportional einem Abstand zwischen einem sich im Ofenraum befindenden Chargiermaterial und dem mindestens einen Brenner ist, und das mindestens eine Regelsignal auf Basis der mindestens einen ersten Temperatur zu erzeugen.

Das erfindungsgemäße Verfahren benötigt dabei keine Signalquelle, mittels welcher ein Signal durch den mindestens einen Brenner hindurch in den Ofenraum gesandt werden müsste. Es ist lediglich mindestens ein Infrarotstrahlungsdetektor vorhanden, mit dem Infrarotstrahlung erfasst und einem Temperaturwert zugeordnet werden kann. Die mindestens eine erste Temperatur, welche auf einer in Richtung des mindestens einen Infrarotstrahlungsdetektors in den mindestens einen Brenner zurückgestrahlten Infrarotstrahlung basiert, wird in der vorderen Hälfte des Brenners innerhalb des Brenners erfasst. Dabei setzt sich die dort im Brennerbetrieb erfassbare Infrarotstrahlung aus einer Summe an Infrarotstrahlungen zusammen, die von unterschiedlichen Strahlungsquellen im Ofenraum stammen.

Wie oben bereits erwähnt, stammt die während des Betriebs des mindestens einen Brenners mittels mindestens eines Infrarotstrahlungsdetektors im vorderen Bereich des Brenners erfassbare Infrarotstrahlung S in der Regel von unterschiedlichen Strahlungsquellen. Als erste Strahlungsquelle für eine erste Infrarotstrahlung S₁ wurde dabei vor allem die von der Flamme am mindestens einen Brenner ausgebildete Eigenstrahlung erkannt. Als zweite Strahlungsquelle für eine zweite Infrarotstrahlung S₂ wurde das Chargiermaterial selbst erkannt. Als dritte Strahlungsquelle für eine dritte Infrarotstrahlung S₃ wurden im Ofenraum aufgewirbelte Staubpartikel erkannt. Weitere Strahlungsquellen Sₓ können durch die Elektroden des Lichtbogenofens, die Ofenwand, weitere Brenner usw. gebildet sein. Die im vorderen Bereich des mindestens einen Brenners mittels des mindestens einen Infrarotstrahlungsdetektors während des Brennerbetriebs messbare Infrarotstrahlung S setzt sich aus der Summe der von den Strahlungsquellen abgegebenen Infrarotstrahlungen S₁, S₂, S₃, Sₓ zusammen und ist proportional zum Abstand zwischen dem mindestens einen Brenner, d.h. dem sich im Ofenraum befindenden Ende des mindestens einen Brenners, und dem sich in fester Form vor diesem Ende des mindestens einen Brenners befindenden Chargiermaterial: S= ΣS₁ + S₂ + S₃ + Sₓ ≈ d

Ein Pyrometer oder Ondometer hat sich hier als besonders für eine Verwendung als Infrarotstrahlungsdetektor geeignet erwiesen, da diese in einfacher Weise auf einen Messpunkt innerhalb der vorderen Hälfte des Brenners fokussiert werden können. Jedoch können auch andere Infrarotstrahlungsdetektoren eingesetzt werden, mit denen dies möglich ist.

Der Abstand zwischen dem mindestens einen Brenner und dem Chargiermaterial ist somit ein direktes Maß für den Schmelzfortschritt im Lichtbogenofen und ermöglicht eine dynamische Regelung einer Einheit umfassend den mindestens einen Brenner, insbesondere hinsichtlich einer Gasversorgung und Brenndauer eines Brenners. Ein zu frühes oder zu spätes Abschalten des mindestens einen Brenners wird zuverlässig verhindert.

Dadurch wird Brennstoff und/oder Brenngas im Brennerbetrieb eingespart und der energetische Wirkungsgrad eines Lichtbogenofens erhöht. Andererseits kann auch eine drohende Beschädigung des Lichtbogenofens aufgrund einer fehlgerichteten Flamme frühzeitig erkannt und verhindert werden. Stillstandszeiten des Lichtbogenofens werden minimiert oder verhindert und Ersatzteilkosten reduziert. Weiterhin werden die Kosten für die Vorrichtung zur dynamischen Regelung reduziert und die Genauigkeit der Bestimmung des Abstands zwischen Brenner und Chargiermaterial verbessert.

Auch ein Chargiervorgang oder ein dem Brennerbetrieb üblicherweise nachgeschalteter Lanzenbetrieb kann zum optimalen Zeitpunkt gestartet werden. Der optimale Zeitpunkt für einen weiteren Chargiervorgang ist beispielsweise durch eine Registrierung eines zu großen Abstands zwischen dem mindestens einen Brenner und dem Chargiergut gegeben. Der optimale Zeitpunkt für das Zuschalten der Lanze nach erreichen der gewünschten Menge an Schmelze im Ofen entspricht im Wesentlichen dem ermittelten optimalen Abschaltzeitpunkt des mindestens einen Brenners. Durch Verhinderung eines zu frühen Starts eines Lanzenbetriebs wird eine Bildung von unerwünschten Metallspritzern im Ofenraum verhindert, die unter Umständen zu einer Beschädigung des Lichtbogenofens führen können. Bevorzugt wird ein Verlauf der mindestens einen ersten Temperatur ausgewertet. Bei Erreichen eines unteren oder oberen Grenzwerts für die Flammenlänge d erfolgt eine Abschaltung des mindestens einen Brenners oder alternativ eine Reduzierung zumindest einer Brennstoffzufuhr zum mindestens einen Brenner unter Ausbildung einer Schutzflamme.

Vorzugsweise umfasst die zumindest eine Einheit weiterhin mindestens eine Lanzenanordnung. Diese kann als separate Lanze, die in den Ofenraum geführt ist, ausgebildet sein. Alternativ sind ein Brenner und eine Lanze in einer Brenner-Lanzen-Kombination zusammengefasst, bei der konzentrisch zueinander angeordnete Rohre einen Brenner bilden, wobei ein Rohr als Lanze verwendbar ist. Mittels der Lanze wird beispielsweise Luft oder Sauerstoff zum Frischen in den Ofenraum geblasen. Ein Lanzenbetrieb wird beispielsweise sofort oder zeitverzögert nach Abschaltung eines Brenners oder Reduzierung zumindest der Brennstoffzufuhr an einem Brenner gestartet. Eine gezielte Beendigung des Brennerbetriebs verhindert einen zu frühen Start des Lanzenbetriebs.

Im Lanzenbetrieb wird besonders bevorzugt ein Gasstrahl aus Sauerstoff mit Überschallgeschwindigkeit in den Ofenraum eingedüst Dabei wird der Gasstrahl bevorzugt von einer Schutzflamme umhüllt. Bei einer Brenner-Lanzen-Kombination wird die Schutzflamme vom Brenner erzeugt. Der Brenner der Brenner-Lanzen-Kombination ist zur Ermöglichung eines solchen Lanzenbetriebs insbesondere im Bereich seines dem Ofenraum zugewandten Endes mit einer Laval-Düse ausgestattet.

Während des Lanzenbetriebs wird bevorzugt mindestens eine zweite Temperatur im Ofenraum des Lichtbogenofens gemessen. Mittels eines über die Lanze eingeblasenen Gasstrahls wird zeitweise die auf der Schmelze gebildete Schlacke weggeblasen und die Oberfläche der Schmelze für die Temperaturmessung freigelegt. Die zweite Temperatur entspricht im Idealfall einer Temperatur der vom Gasstrahl freigelegten Oberfläche der Schmelze. Dabei wird der während des Lanzenbetriebs vom eingedüsten Gasstrahl erzeugte Gaskanal zur Messung ausgenutzt, der eine klare und ungestörte Sicht auf die Schmelze ermöglicht.

Die mindestens eine Recheneinheit der Vorrichtung ist mit Vorteil dazu eingerichtet, einen Verlauf der mindestens einen ersten Temperatur auszuwerten und bei Erreichen eines unteren oder oberen Grenzwerts für die Flammenlänge d mindestens ein Regelsignal an die mindestens eine Regeleinrichtung auszugeben, das eine Abschaltung des mindestens einen Brenners oder alternativ eine Reduzierung einer Brennstoffzufuhr zum mindestens einen Brenner unter Ausbildung einer Schutzflamme bewirkt.

Sobald ein Abstand ermittelt wird, der unterhalb des unteren Grenzwerts liegt, wird davon ausgegangen, dass sich vor dem mindestens einen Brenner Chargiermaterial befindet, das den Brenner blockiert oder die Flamme in Richtung der Ofenwand ablenkt und diese dadurch beschädigt werden kann. Durch eine Abschaltung des betroffenen Brenners kann dies vermieden werden.

Sobald ein Abstand zwischen Brenner und Chargiermaterial ermittelt wird, der oberhalb des oberen Grenzwerts liegt, wird davon ausgegangen, dass sich vor dem mindestens einen Brenner keine ausreichend große Oberfläche des Chargiermaterials mehr befindet, welche die Energie aufnehmen kann, und dass der Brennerbetrieb beendet werden kann.

Im Fall, dass die Einheit mindestens eine Lanze umfasst, ist die mindestens eine Recheneinheit bevorzugt dazu eingerichtet, nach der Ausgabe des mindestens einen Regelsignals zur Abschaltung eines Brenners oder zur Reduzierung zumindest der Brennstoffzufuhr eines Brenners ein weiteres Regelsignal zum Starten eines Lanzenbetriebs auszugeben. Die mindestens eine Regeleinrichtung ist insbesondere dazu eingerichtet, im Lanzenbetrieb ein Eindüsen eines Gasstrahls mit Überschallgeschwindigkeit in den Ofenraum zu bewirken.

Es hat sich bewährt, wenn die mindestens eine Regeleinrichtung mindestens ein erstes Regelventil zur Reglung einer Brennstoffzufuhrmenge zum mindestens einen Brenner und mindestens ein zweites Regelventil zur Regelung einer Brenngaszufuhrmenge zum mindestens einen Brenner aufweist. Die mindestens eine Regeleinrichtung weist mit Vorteil weiterhin mindestens ein drittes Regelventil zur Regelung des im Lanzenbetrieb eingedüsten Gasstrahls auf.

Dabei umfasst eine Einheit bevorzugt mehrere Brenner und/oder Lanzen, insbesondere mehrere Brenner-Lanzen-Kombinationen. Diese können jeweils dynamisch und unabhängig voneinander geregelt werden.

Ein Lichtbogenofen mit mindestens einer erfindungsgemäßen Vorrichtung besitzt einen hohen energetischen Wirkungsgrad und kann somit kostengünstig betrieben werden.

Eine Verwendung mindestens einer erfindungsgemäßen Vorrichtung zur Durchführung eines erfindungsgemäßen Verfahrens an einem Lichtbogenofen hat sich bewährt.

Die Figuren 1 bis 6 sollen die Erfindung beispielhaft erläutern. So zeigt
- FIG 1: einen Ausschnitt eines Lichtbogenofens mit einem Brenner und einem Infrarotstrahlungsdetektor;
- FIG 2: eine Draufsicht auf einen Lichtbogenofen mit einer Mehrzahl an Brennern und einem Infrarotstrahlungsde- tektor;
- FIG 3: eine schematische Seitenansicht eines Brenners im Brennerbetrieb;
- FIG 4: eine weitere schematische Seitenansicht eines Bren- ners im Brennerbetrieb;
- FIG 5: eine Darstellung des gemessenen Temperaturverlaufs in einem ersten Aufschmelzzyklus; und
- FIG 6: eine Darstellung des gemessenen Temperaturverlaufs in einem weiteren Aufschmelzzyklus.

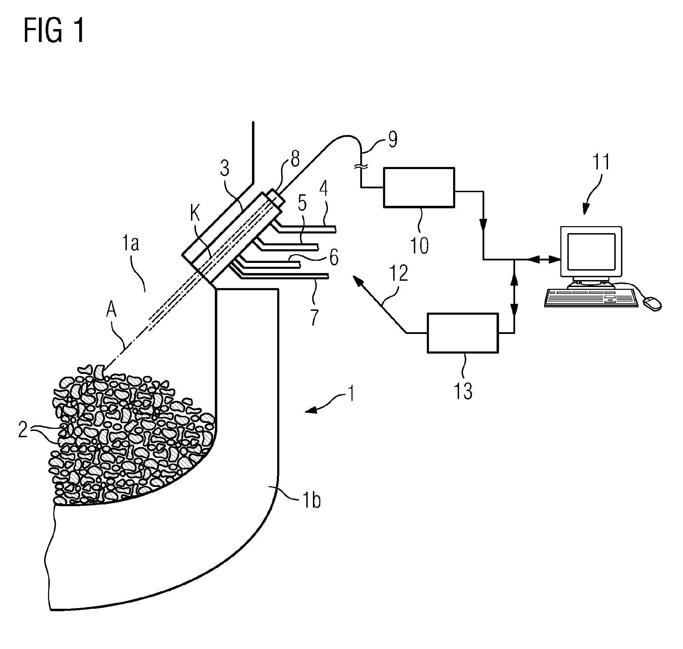

FIG 1 zeigt einen Ausschnitt eines Lichtbogenofens 1, in dessen Ofenraum aufzuschmelzendes Chargiermaterial 2 angeordnet ist. Es handelt sich hier überwiegend um Schrott bzw. Altmetall, weiterhin um Stückkohle und weitere Zuschlagsstoffe. In der Ofenwand 1a des Lichtbogenofens 1 ist ein Brenner 3 installiert, welcher in Richtung des Ofenraums 1a ausgerichtet ist. Der Brenner 3 weist einen Kanal K auf, durch welchen Gas in Richtung des Ofenraums 1a führbar ist.

Der Brenner 3 bildet gleichzeitig eine Lanze (= Brenner-Lanzen-Kombination), wobei der Kanal K zum Einströmen des im Lanzenbetrieb benötigten Gasstrahls genutzt wird. Der Brenner 3 weist eine Gaszuführeinrichtung 4 zur Zuführung von im Lanzenbetrieb benötigtem Gas auf, das vorzugsweise mit Überschallgeschwindigkeit in den Ofenraum eingedüst wird.

Weiterhin sind mindestens eine Brennstoffzuführeinrichtung 5 und mindestens eine Brenngaszuführeinrichtung 6 vorhanden. Mittels einer Brennstoffzuführeinrichtung 5 wird dem Brenner 3 organischer Brennstoff, hier vorzugsweise Erdgas, zugeführt. Der Brennstoff wird zusammen mit Brenngas, hier in Form von Sauerstoff, verbrannt, der mittels der Brenngaszuführeinrichtung 6 zugeführt wird.

Ferner weist der Brenner 3 eine Kühleinrichtung 7 zur Zuführung von Kühlmittel, insbesondere Wasser, auf. Mittels des Kühlmittels wird der Brenner 3 vor Überhitzung geschützt.

Der Infrarotstrahlungsdetektor 10 ist auf der dem Ofenraum 1a des Lichtbogenofen 1 abgewandten Seite des Brenners 3 mit diesem derart verbunden, dass eine Temperaturmessung durchführbar ist. Der Kanal K des Brenners 3 weist vorzugsweise eine Mittenachse A auf. Ausgehend vom heißen Ofenraum 1a kann sich Infrarotstrahlung ausgehend von mehreren Strahlungsquellen längs der Mittenachse A ausbreiten und gelangt so in den Kanal K des Brenners 3. Vom Kanal K gelangt die Infrarotstrahlung hier in eine Bündelungseinrichtung 8, beispielsweise ein Linsensystem, welche die Infrarotstrahlung bündelt und - etwa wie im vorliegenden Ausführungsbeispiel - in einen Lichtwellenleiter 9 einkoppelt. Mittels des Lichtwellenleiters 9 wird die Infrarotstrahlung dem Infrarotstrahlungsdetektor 10 zugeführt, welcher aus der eingekoppelten Infrarotstrahlung eine Temperatur ermittelt. Dies kann beispielsweise mittels eines Infrarotstrahlungsdetektors 10 geschehen, der in Form eines Pyrometers oder eines Ondometers vorliegt.

Der Infrarotstrahlungsdetektor 10 ist vorzugsweise derart ausgebildet, dass dieser die Temperatur unterschiedlicher spektraler Anteile der Infrarotstrahlung bestimmen kann. Dadurch werden Fehler bei der Temperaturerfassung signifikant verringert. Dies kann beispielsweise mittels eines Quotientenpyrometers, welches auch Verhältnispyrometer oder Zweifarbenpyrometer genannt wird, erreicht werden. Es können auch andere geeignete Infrarotstrahlungsdetektoren 10 mit entsprechender Messgenauigkeit zum Einsatz kommen.

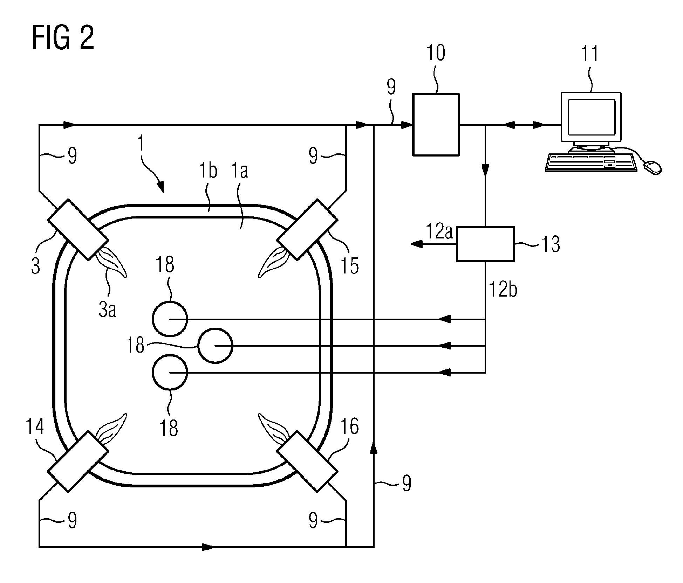

Nachdem der Infrarotstrahlungsdetektor 10 hier mit dem Brenner 3 über den Lichtwellenleiter 9 und die Bündelungseinrichtung 8 verbunden ist, muss sich der Infrarotstrahlungsdetektor 10 nicht in unmittelbarer Nähe des Brenners 3 befinden. Der Infrarotstrahlungsdetektor 10 kann auf gleiche Weise noch mit weiteren Brennern, die am Lichtbogenofen 1 angeordnet sind, verbunden sein (siehe FIG 2). Jedoch kann auf den Lichtwellenleiter 9 auch verzichtet werden, wenn ein Infrarotstrahlungsdetektor sich unmittelbar an die Bündelungseinrichtung 8 oder sich an das dem Ofenraum 1a abgewandte Ende des Brenners 3 anschließt.

Während des Einschmelzvorgangs und eines Betriebs des Brenners 3 wird mittels des Infrarotstrahlungsdetektors 10 mindestens eine erste Temperatur gemessen, welche auf einer in Richtung des mindestens einen Infrarotstrahlungsdetektors 10 in den mindestens einen Brenner 3 zurückgestrahlten Infrarotstrahlung basiert. Der Fokus der Temperaturmessung liegt dabei in der vorderen Hälfte des Brenners 3.

Zur dynamischen Regelung einer Einheit umfassend den Brenner 3 ist eine Regeleinrichtung 13 vorhanden, die auf Basis mindestens eines Regelsignals die Zuführung von Brennstoff und Brenngas im Brennerbetrieb und weiterhin beispielsweise die Zuführung eines Gasstrahls während des Lanzenbetriebs usw. regelt.

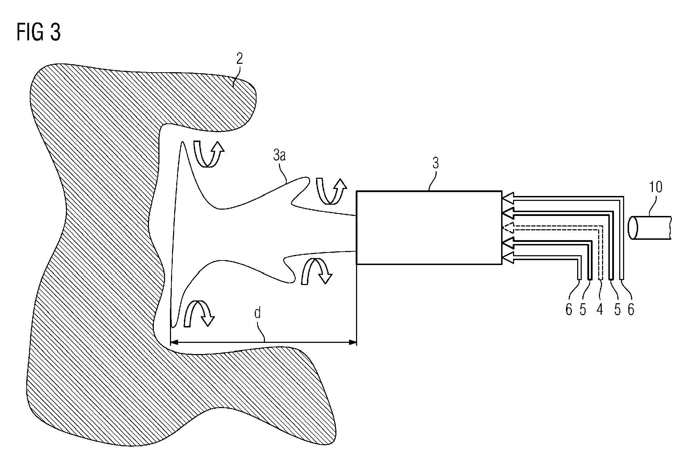

Weiterhin ist eine Recheneinheit 11 vorhanden, welche mit dem Infrarotstrahlungsdetektor 10 verbunden und dazu eingerichtet ist, die mindestens eine erste Temperatur mit einer Flammenlänge d einer am Brenner 3 brennenden Flamme (siehe FIG 2 und 3) zu korrelieren, welche proportional einem Abstand zwischen dem sich im Ofenraum 1a befindenden Chargiermaterial 2 und dem Brenner 3 ist. Dazu ist auf der Recheneinheit 11 mindestens ein Korrelationsschema hinterlegt, mittels welchem im Brennerbetrieb einer bestimmten ersten Temperatur eine bestimmte Flammenlänge d zuordenbar ist. Ein solches Korrelationsschema kann für einen Lichtbogenofen 1 experimentell in Abhängigkeit vom verwendeten Chargiermaterial 2 vorab ermittelt und für nachfolgende Aufschmelzzyklen entsprechend ausgewählt werden. Die Recheneinheit 11 erzeugt das mindestens eine Regelsignal auf Basis der mindestens einen ersten Temperatur bzw. der zugeordneten Flammenlänge d und kommuniziert mit der Regeleinrichtung 13, an welche das mindestens eine Regelsignal übermittelt wird.

Anhand des mindestens einen Regelsignals werden dann mittels der Regeleinrichtung 13 Regeleingriffe an einer Einheit umfassend den Brenner 3 vorgenommen, die das Zu- oder Abschalten des Brenners 3, eine Änderung der Zuführmengen für Brennstoff und/oder Brenngas, der Beginn eines Chargiervorgangs, das Starten des Lanzenbetriebs und/oder die Auswahl und Menge des im Lanzenbetrieb eingedüsten Gases, gegebenenfalls weiterhin eine Änderung der Stromzufuhr zu den Elektroden des Lichtbogenofens 1, eine Änderung der Position der Elektroden des Lichtbogenofens 1 usw. bewirken können. Dies ist in FIG 1 durch einen von der Regeleinrichtung 13 nach links abgehenden Pfeil 12 dargestellt.

Der Lanzenbetrieb wird vorzugsweise erst dann gestartet, wenn das Chargiermaterial 2 vollständig aufgeschmolzen vorliegt. Durch den Gasstrahl, welcher im Lanzenbetrieb mit Überschallgeschwindigkeit aus dem Brenner 3 ausströmt, wird Schlacke, welche sich auf der Schmelze ausgebildet hat, lokal entfernt bzw. weggeblasen. Somit ist die Schmelzenoberfläche zur kontaktlosen Temperaturerfassung freigelegt und es kann die Temperatur der Schmelze im Ofenraum mittels des Infrarotstrahlungsdetektors 10 oder eines anderen Detektors erfasst werden.

FIG 2 zeigt eine schematische Draufsicht auf einen Lichtbogenofen 1, durch dessen Ofenwand 1b mehrere Brenner 3, 14, 15, 16 geführt sind. Den Brennern 3, 14, 15, 16 ist ein Infrarotstrahlungsdetektor 10 zugeordnet, wobei ein jeder Brenner 3, 14, 15, 16 über je einen Lichtwellenleiter 9 mit dem Infrarotstrahlungsdetektor 10 verbunden ist. Dabei ist der Infrarotstrahlungsdetektor 10 hier eingerichtet, zwischen den von den unterschiedlichen Brennern 3, 14, 15, 16 kommenden Signalen zu unterscheiden. An den Brennern 3, 14, 15, 16 sind in FIG 2 nicht dargestellte Bündelungseinrichtungen (siehe FIG 1) angeordnet, welche die vom Ofenraum 1a kommende, in den jeweiligen Brenner 3, 14, 15, 16 eintretende Temperaturstrahlung bündelt und in die Lichtwellenleiter 9 einkoppelt. Die Regeleinrichtung 13 ist hier dazu eingerichtet, über einen Regeleingriff die Einheit umfassend zumindest die Brenner 3, 14, 15, 16 dynamisch zu regeln (siehe Pfeil 12a) und weiterhin mittels eines Regeleingriffs eine Stromzufuhr und/oder Position der Elektroden 18 des Lichtbogenofens 1 zu regeln bzw. zu verändern (siehe Pfeile 12b).

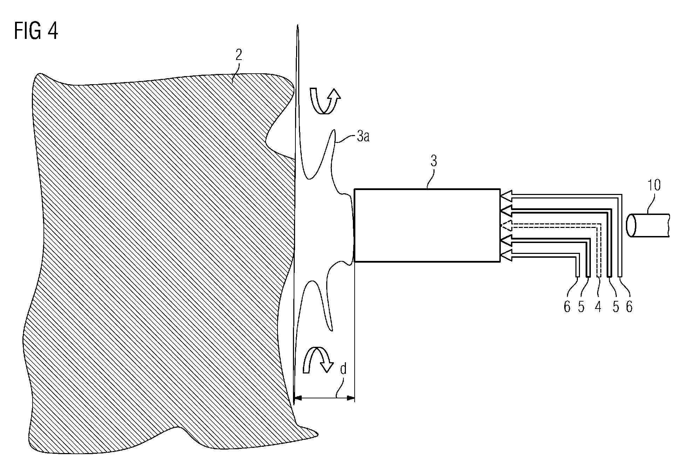

FIG 3 und FIG 4 zeigen schematische Seitenansichten des Brenners 3 aus FIG 1 im Brennerbetrieb, wobei die sich am Brenner 3 ausbildende Flamme 3a in Richtung des aufzuschmelzenden Chargiermaterials 2 gerichtet ist.

Eine während des Betriebs des Brenners 3 mittels des hier schematisch gezeigten Infrarotstrahlungsdetektors 10 in der vorderen Hälfte des Brenners 3 erfassbare Infrarotstrahlung S stammt in der Regel von unterschiedlichen Strahlungsquellen. Als erste Strahlungsquelle für eine erste Infrarotstrahlung S₁ wurde dabei vor allem die von der Flamme 3a am Brenner 3 ausgebildete Eigenstrahlung erkannt. Als zweite Strahlungsquelle für eine zweite Infrarotstrahlung S₂ wurde das Chargiermaterial 2 erkannt. Als dritte Strahlungsquelle für eine dritte Infrarotstrahlung S₃ wurden im Ofenraum 1a aufgewirbelte oder in der Flamme enthaltene Partikel erkannt. Weitere Strahlungsquellen Sₓ können durch die Elektroden 18 (siehe FIG 2), die Ofenwand 1b, weitere Brenner 14, 15, 16 usw. gebildet sein. Die im Brenner 3 mittels des Infrarotstrahlungsdetektors 10 während des Brennerbetriebs messbare Infrarotstrahlung S setzt sich aus der Summe der von den Strahlungsquellen abgegebenen Infrarotstrahlungen S₁, S₂, S₃, Sₓ zusammen und ist mit der Flammenlänge d korreliert, die proportional einem Abstand zwischen dem Brenner 3, d.h. dem sich im Ofenraum 1a befindenden Ende des Brenners 3, und dem sich in fester Form vor diesem Ende befindenden Chargiermaterial 2 ist. Es gilt: S= ΣS₁ + S₂ + S₃ + Sₓ ≈ d.

Wie aus den FIGen 3 und 4 ersichtlich wird, ist der Abstand zwischen dem Chargiermaterial 2 und dem Brenner 3 umso größer, je länger die Flamme 3a bzw. je größer die Flammenlänge d ist. Unterschreitet die Flammenlänge d einen unteren Grenzwert oder überschreitet sie einen oberen Grenzwert, so erfolgt eine Abschaltung des Brenners 3 oder eine Reduzierung zumindest der Brennstoffzuführmenge.

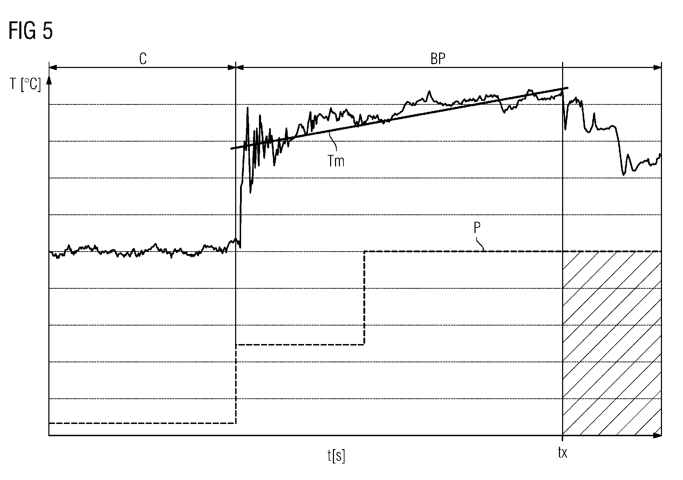

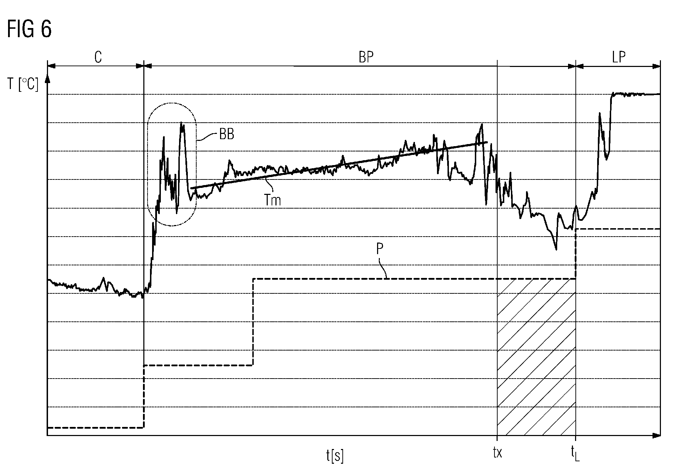

FIG 5 und FIG 6 zeigen jeweils einen mittels eines Infrarotstrahlungsdetektors während eines Chargier- und Einschmelzvorgangs in der vorderen Hälfte eines Brenners aufgenommenen Temperaturverlauf T in °C über eine Zeit t in Sekunden. FIG 5 zeigt dabei den in der vorderen Hälfte eines Brenners gemessenen Temperaturverlauf, während FIG 6 den in der vorderen Hälfte einer Brenner-Lanzen-Kombination gemessenen Temperaturverlauf darstellt. Weiterhin ist der Verlauf der Leistung P des Brenners bzw. des Brenners der Brenner-Lanzen-Kombination über die Zeit t aufgetragen.

Ein Öffnen des Lichtbogenofens und ein Chargieren von Chargiermaterial in den Ofenraum erfolgt in den mit C bezeichneten Zeitabschnitten, in denen der Brenner bzw. der Brenner der Brenner-Lanzen-Kombination nicht in Betrieb ist.

In den mit BP bezeichneten Zeitabschnitten erfolgt ein Brennerbetrieb. Während des Betriebs des Brenners steigt die mittels des Infrarotstrahlungsdetektors ermittelte Temperatur T anfangs im Mittel stetig an (siehe gemittelter Temperaturverlauf Tm) und sinkt nach einer bestimmten Zeitspanne deutlich ab. Solange die Temperatur T während des Betriebs des Brenners im Mittel ansteigt, ist ein effizienter Wärmeübertrag der über den Brenner in den Ofenraum eingebrachten Energiemenge an das Chargiermaterial gewährleistet. Sobald die Temperatur T während des Brennerbetriebs beginnt, stetig zu sinken, ist ein effizienter Wärmeübertrag an das Chargiermaterial nicht mehr gewährleistet und es kann eine Abschaltung des Brenners erfolgen. Zu diesem Zeitpunkt tx ist der Abstand zwischen dem Chargiermaterial und dem Brenner bereits so groß und/oder die Oberfläche des Chargiermaterials bereits so geschrumpft, dass die durch Verbrennung in den Ofenraum eingebrachte Energiemenge nicht mehr hauptsächlich auf das Chargiermaterial übertragen wird. Das Chargiermaterial stellt keine genügend große Oberfläche für die Wärmeübertragung mehr bereit und ein Großteil der über den Brenner eingebrachten Energie bleibt für das Aufschmelzen des Chargiermaterials ungenutzt. Die Energie wird an die Ofenatmosphäre abgegeben, welche über eine Absaugung aus dem Ofenraum abgeführt wird.

Die in FIG 5 schraffiert dargestellte Fläche unter der Leistungskurve P stellt die Energiemenge dar, die bei einem Abschalten des Brenners zum Zeitpunkt tx erfindungsgemäß eingespart werden kann.

Ein extremer Anstieg der Temperatur T während eines Brennerbetriebs, wie in FIG 6 erkennbar, kennzeichnet in der Regel eine Blockade BB des Brenners durch Chargiermaterial, wobei die Brenneröffnung vollständig oder fast vollständig durch Chargiermaterial versperrt wird. Sinkt die Temperatur T nicht innerhalb kürzester Zeit wieder ab, so muss der Brenner abgeschaltet werden, um eine Schädigung des Lichtbogenofens zu verhindern. Eine Verlagerung des Chargiermaterials unter Beseitigung der Brennerblockade BB kann beispielsweise durch einen Fortschritt des Aufschmelzvorgangs, einen weiteren Chargiervorgang oder Bewegen der Elektroden relativ zum Ofenraum des Lichtbogenofens erfolgen.

Der in FIG 6 mit LP bezeichnete Zeitabschnitt bezeichnet einen Lanzenbetrieb, welcher bei Erreichen einer genügend großen Menge an Schmelze im Lichtbogenofen eingeleitet wird, indem der Brenner der Brenner-Lanzen-Kombination abgeschaltet und die Lanze der Brenner-Lanzen-Kombination aktiviert wird. Während des Lanzenbetriebs wird die Oberflächentemperatur der im Ofenraum gebildeten Schmelze mittels des Infrarotstrahlungsdetektors erfasst, wobei bevorzugt die sich auf der Schmelze befindende Schlacke lokal weggeblasen wird. Die Leistung P der Brenner-Lanzen-Kombination erreicht dabei ein Maximum. Im Lanzenbetrieb erfolgt beispielsweise ein Eindüsen von Sauerstoff in den Ofenraum, um die gebildete Schmelze zu frischen. Während des Lanzenbetriebs bleibt die mittels des Infrarotstrahlungsdetektors ermittelte Temperatur T weitgehend konstant.

Die schraffiert dargestellte Fläche unter der Leistungskurve P in FIG 6 stellt die Energiemenge dar, die bei einem Abschalten des Brenners zum Zeitpunkt tx erfindungsgemäß eingespart werden kann. Der Lanzenbetrieb kann in diesem Fall um einen Zeitabschnitt Δt = t_{L} - tx früher gestartet werden. Der Zeitpunkt tx entspricht damit dem optimalen Zeitpunkt zur Abschaltung des Brenners und zum Beginn des Lanzenbetriebs. Selbstverständlich sind auch andere Ausgestaltungen eines Lichtbogenofens, eines Brenners, einer Brenner-Lanzen-Kombination, getrennte Brenner und Lanzen usw. mit der Erfindung vereinbar, die hier nicht gesondert dargestellt sind.

## Patentansprüche

1. Verfahren zur dynamischen Regelung zumindest einer Einheit umfassend mindestens einen Brenner (3, 14, 15, 16), der an einem Lichtbogenofen (1) angeordnet ist, wobei der mindestens eine Brenner (3, 14, 15, 16) auf einer einem Ofenraum (1a) des Lichtbogenofens (1) abgewandten Seite mit mindestens einem Infrarotstrahlungsdetektor (10) verbunden ist, mit welchem eine Temperaturmessung erfolgt, wobei während eines Betriebs des mindestens Brenners (3, 14, 15, 16) mindestens eine erste Temperatur gemessen wird, welche auf einer in Richtung des mindestens einen Infrarotstrahlungsdetektor (10) in den mindestens einen Brenner (3, 14, 15, 16) zurückgestrahlten Infrarotstrahlung basiert, wobei die mindestens eine erste Temperatur mit einer Flammenlänge d einer am mindestens einen Brenner brennenden Flamme (3a) korreliert wird, welche proportional einem Abstand zwischen einem sich im Ofenraum (1a) befindenden Chargiermaterial (2) und dem mindestens einen Brenner (3, 14, 15, 16) ist, und wobei die mindestens eine erste Temperatur zur Bildung mindestens eines Regelsignals zur dynamischen Regelung zumindest der Einheit eingesetzt wird.

2. Verfahren nach Anspruch 1, wobei ein Verlauf der mindestens einen ersten Temperatur ausgewertet wird und bei Erreichen eines unteren oder oberen Grenzwerts für die Flammenlänge d eine Abschaltung des mindestens einen Brenners (3, 14, 15, 16) oder eine Reduzierung zumindest einer Brennstoffzufuhr zum mindestens einen Brenner (3, 14, 15, 16) unter Ausbildung einer Schutzflamme erfolgt.

3. Verfahren nach Anspruch 2, wobei die zumindest eine Einheit weiterhin mindestens eine Lanzenanordnung umfasst und nach Abschalten des mindestens einen Brenners (3, 14, 15, 16) oder nach der Reduzierung zumindest der Brennstoffzufuhr zum mindestens einen Brenner (3, 14, 15, 16) ein Lanzenbetrieb gestartet wird.

4. Verfahren nach Anspruch 3, wobei im Lanzenbetrieb ein Gasstrahl aus Sauerstoff mit Überschallgeschwindigkeit in den Ofenraum (1a) eingedüst wird.

5. Verfahren nach Anspruch 3 oder Anspruch 4, wobei im Lanzenbetrieb mittels des mindestens einen Infrarotstrahlungsdetektors (10) mindestens eine zweite Temperatur im Ofenraum (1a) des Lichtbogenofens (1) gemessen wird.

6. Vorrichtung zur Durchführung eines Verfahrens nach einem der Ansprüche 1 bis 5, umfassend
- zumindest eine Einheit, welche mindestens einen Brenner (3, 14, 15, 16) umfasst, welcher an einem Lichtbogenofen (1) angeordnet ist,
- mindestens eine Regeleinrichtung (13) zur dynamischen Regelung zumindest der Einheit auf Basis mindestens eines Regelsignals,
- mindestens einen Infrarotstrahlungsdetektor (10), welcher auf einer einem Ofenraum (1a) des Lichtbogenofens (1) abgewandten Seite des mindestens einen Brenners (3, 14, 15, 16) mit diesem verbunden ist derart, dass eine Temperaturmessung durchführbar ist, wobei während eines Betriebs des mindestens einen Brenners (3, 14, 15, 16) mindestens eine erste Temperatur messbar ist, welche auf einer in Richtung des mindestens einen Infrarotstrahlungsdetektors (10) in den mindestens einen Brenner (3, 14, 15, 16) zurückgestrahlten Infrarotstrahlung basiert, und
- mindestens eine Recheneinheit (11), welche eingerichtet ist, die mindestens eine erste Temperatur mit einer Flammenlänge d einer am mindestens einen Brenner (3, 14, 15, 16) brennenden Flamme (3a) zu korrelieren, welche proportional einem Abstand zwischen einem sich im Ofenraum (1a) befindenden Chargiermaterial (2) und dem mindestens einen Brenner (3, 14, 15, 16) ist, und das mindestens eine Regelsignal auf Basis der mindestens einen ersten Temperatur zu erzeugen.

7. Vorrichtung nach Anspruch 6, wobei die zumindest eine Einheit weiterhin mindestens eine Lanzenanordnung umfasst.

8. Vorrichtung nach einem der Ansprüche 6 oder 7, wobei die mindestens eine Recheneinheit (11) eingerichtet ist, einen Verlauf der mindestens einen ersten Temperatur auszuwerten und bei Erreichen eines unteren oder oberen Grenzwerts für die Flammenlänge d mindestens ein Regelsignal an die mindestens eine Regeleinrichtung (13) auszugeben, das eine Abschaltung des mindestens einen Brenners (3, 14, 15, 16) oder eine Reduzierung zumindest einer Brennstoffzufuhr zum mindestens einen Brenner (3, 14, 15, 16) unter Ausbildung einer Schutzflamme bewirkt.

9. Vorrichtung nach Anspruch 8, wobei im Fall, dass die zumindest eine Einheit mindestens eine Lanze umfasst, die mindestens eine Recheneinheit (11) eingerichtet ist, nach der Ausgabe des mindestens einen Regelsignals zur Abschaltung des Brenners oder zur Reduzierung zumindest der Brennstoffzufuhr ein weiteres Regelsignal zum Starten eines Lanzenbetriebs auszugeben.

10. Vorrichtung nach Anspruch 9, wobei die mindestens eine Regeleinrichtung (13) eingerichtet ist, im Lanzenbetrieb ein Eindüsen eines Gasstrahls mit Überschallgeschwindigkeit in den Ofenraum (1a) zu bewirken.

11. Vorrichtung nach einem der Ansprüche 5 bis 10, wobei die mindestens eine Regeleinrichtung (13) mindestens ein erstes Regelventil zur Reglung einer Brennstoffzufuhrmenge zum mindestens einen Brenner (3, 14, 15, 16) und mindestens ein zweites Regelventil zur Regelung einer Brenngaszufuhrmenge zum mindestens einen Brenner (3, 14, 15, 16) aufweist.

12. Vorrichtung nach Anspruch 11, wobei die mindestens eine Regeleinrichtung (13) weiterhin mindestens ein drittes Regelventil zur Regelung des Gasstrahls im Lanzenbetrieb aufweist.

13. Lichtbogenofen (1) mit mindestens einer Vorrichtung nach einem der Ansprüche 6 bis 12.

14. Verwendung mindestens einer Vorrichtung nach einem der Ansprüche 6 bis 13 zur Durchführung eines Verfahrens nach einem der Ansprüche 1 bis 5 an einem Lichtbogenofen (1).
